# EUROPEAN PATENT APPLICATION

(11) **EP 2 604 944 A1**
(43) Date of publication of application: **19.06.2013**
(21) Application number: 11816525.7
(22) Date of filing: 22.04.2011
(51) Int. Cl.: F24H 1/40, F23D 14/66, F24H 8/00, F24D 3/00

(54) **LATENT HEAT EXCHANGER IN CONDENSING BOILER**

(30) Priority: 12.08.2010 KR 20100077878
(71) Applicant: Kyungdong Navien Co., Ltd., Pyungtaek-si Gyunggi-do 450-818 (KR)
(72) Inventor: MIN, Tae Sik, Seoul 156-070 (KR)
(74) Representative: Habermann, Hruschka & Schnabel
(86) International application number: PCT/KR2011/002929
(87) International publication number: WO 2012/020909

(57) **Abstract**

Provided is a latent heat exchanger of a condensing boiler, in which the condensing boiler includes a sensible heat exchanger absorbing combustion sensible heat generated from a burner, a latent heat exchanger absorbing latent heat of water vapor contained in a combustion product heat-exchanged by the sensible heat exchanger, an exhaust hood discharging the combustion product flowing through the latent heat exchanger, and a condensed water outlet discharging condensed water generated from the latent heat exchanger, the latent heat exchanger is configured so that the combustion product burnt by the burner flows through the sensible heat exchanger, is vertically raised toward the latent heat exchanger, is slantingly lowered in an outward direction at an acute angle from a horizontal plane, is heat-exchanged by the latent heat exchanger, is vertically raised, and is discharged to the exhaust hood.

## Description

### [Technical Field]

The present invention relates generally to a latent heat exchanger of a condensing boiler and, more particularly, to a latent heat exchanger of a condensing boiler, which allows an exhaust direction of a combustion product and a discharge direction of condensed water to be identical to reduce exhaust resistance of the combustion product and to smoothly discharge the condensed water generated from the latent heat exchanger, and which has a simple coupling internal structure.

### [Background Art]

Boilers are apparatuses that make a desired area warm by heating a heat medium in a closed container with a heat source, and are each made up of a burner burning fuel and a heat exchanger exchanging heat between burnt high-temperature combustion air and heating water.

Earlier heat exchangers of boilers used only sensible heat generated during combustion of the burner, and discharged the high-temperature combustion air through an exhaust hood. Thus, the boilers were very low in heat efficiency, and required a long time to obtain high-temperature heating water.

For this reason, the boilers produced in recent years have been equipped with sensible heat exchangers, which absorb sensible heat of a combustion product generated from a combustion chamber, and latent heat exchangers, which absorb latent heat of steam contained in the combustion product undergoing heat exchange at the sensible heat exchanger, in order to increase heat efficiency. This type of boiler is called a condensing boiler.

Such a condensing boiler is applied to oil boilers as well as gas boilers, and greatly contributes to an increase in heat efficiency and saving of fuel expenses.

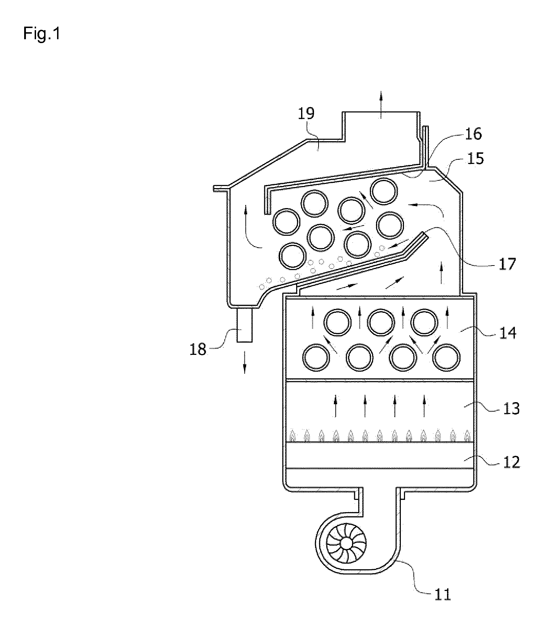

FIG. 1 is a schematic view showing a structure of a conventional upward combustion type condensing boiler.

The conventional upward combustion type condensing boiler has a structure in which a blower 11 is located at a bottom end thereof, and in which an upward combustion type burner 12, a combustion chamber 13, a sensible heat exchanger 14, a latent heat exchanger 15, and an exhaust hood 19 are sequentially installed upwardly.

The latent heat exchanger 15 is inclinedly disposed at an upper side of the sensible heat exchanger 14, and is provided with a condensed water outlet 18 at one side of a bottom portion thereof through which condensed water produced from the latent heat exchanger 15 is discharged.

An upper guide 16 is installed on an upper portion of the latent heat exchanger 15 so as to guide a flow direction of the combustion product, and a lower guide 17 is installed on a lower portion of the latent heat exchanger 15 so as to guide the flow direction of the combustion product and to guide falling condensed water toward the condensed water outlet 18.

The combustion product flowing through the sensible heat exchanger 14 moves upward by way of one side of the lower guide 17, and then flows through an interior of the latent heat exchanger 15 in a downward inclined direction. The combustion product is subjected to a change in flow path in an upward direction again, and is discharged through the exhaust hood 19.

According to this configuration, although the condensing boiler is configured in an upward combustion type, the exhaust direction of the combustion product and the discharge direction of the condensed water are equal to each other, so that the condensed water can be smoothly discharged without resistance of the combustion product.

However, according to the configuration of the latent heat exchanger of the conventional upward combustion type condensing boiler, to change the flow path of the combustion product, the upper guide 16 and the lower guide 17 are installed over most of the inner upper and lower portions of the latent heat exchanger 15. As such, the latent heat exchanger 15 has a complicated structure.

Further, in the process in which the combustion product moves from the sensible heat exchanger 14 to the latent heat exchanger 15, the combustion product is subjected to exhaust resistance by interference with the lower guide 17. Even in the process in which the combustion product flows from the one side to the other side in the latent heat exchanger 15, the combustion product is subjected to the exhaust resistance while flowing between a plurality of heat exchanging tubes installed in the latent heat exchanger in rows and between heat exchanging fins coupled to the heat exchanging tubes, so that the combustion product is not smoothly discharged.

In addition, in the conventional upward combustion type condensing boiler, since the lower guide 17 serving as a condensed water tray is located directly at an upper side of the sensible heat exchanger 14, the lower guide 17 is heated to a considerably high temperature by the contact with the high-temperature combustion product flowing through the sensible heat exchanger 14. Thus, even when the condensed water produced while the combustion product flows through the latent heat exchanger 15 falls to the lower guide 17, a considerable amount of condensed water is evaporated again due to the heated lower guide 17. For this reason, the latent heat recollected by the condensation is again discharged in an evaporation heat form, and thus it is impossible to obtain maximum condensation efficiency.

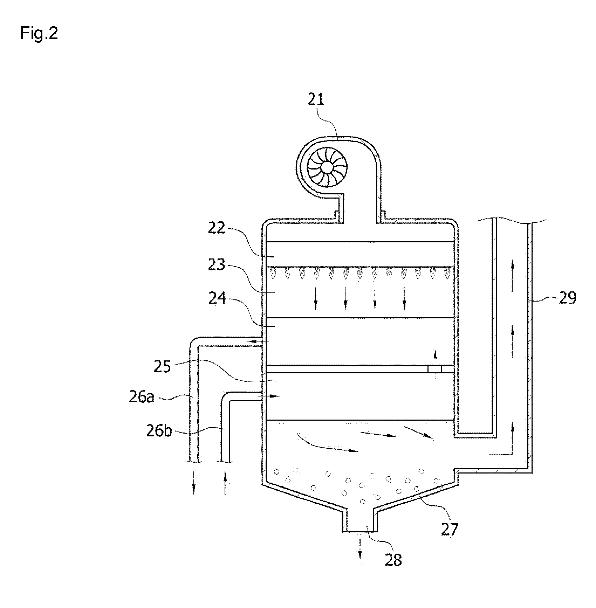

FIG. 2 is a schematic view showing a structure of a conventional downward combustion type condensing boiler.

The conventional downward combustion type condensing boiler has a structure in which a blower 21 is located at a top end thereof, a downward combustion type burner 22, a combustion chamber 23, a sensible heat exchanger 24, and a latent heat exchanger 25 are sequentially installed downwardly, a condensed water tray 27 and a condensed water outlet 28 are located on a lower side of the latent heat exchanger 25, and an exhaust hood 29 is installed on one side of the condensed water tray 27 and the condensed water outlet 28.

Heating water heated by passing through the sensible heat exchanger 24 and the latent heat exchanger 25 is conveyed into a room through a feed pipe 26a connected to one side of the sensible heat exchanger 24, and transmits heat energy. Thereby, the heating water is cooled, and is conveyed back to a return pipe 26b connected to one side of the latent heat exchanger 25. The heating water conveyed back to the return pipe 26b flows into the latent heat exchanger 25 again, and condenses water vapor contained in the combustion product passing through the sensible heat exchanger 24 so as to recollect the latent heat.

In the case of the downward combustion type condensing boiler, a falling direction (i.e., a vertical downward direction) of the condensed water by gravity and an exhaust direction of the combustion product passing through the sensible heat exchanger 24 and the latent heat exchanger 25 are naturally identical. This is a very important factor in improving the efficiency of the condensing boiler.

That is, the water vapor in the combustion product is condensed while passing through the latent heat exchanger 25, and thus transmits the latent heat to the circulatory heating water. Then, the temperature of the combustion product is greatly lowered. As such, the interior of the condensed water tray 27 is maintained at a very low temperature, and a loss of heat caused by re-evaporation of the water vapor liquified into the condensed water can be minimized.

This downward combustion type condensing boiler is estimated to be a most preferable condensing boiler from the viewpoint of a structure capable of recollecting the most latent heat, but it is accompanied with a limitation that a burner in which downward combustion is possible should be essentially provided.

The burners applied to the boiler may be generally divided into pre-mixed burners and Bunsen burners.

Pre-mixed burners employ a system that burns pre-mixed gas obtained by pre-mixed gas and air for combustion in a mixing chamber, and has an advantage in that it can be installed regardless of a combustion direction such as an upward direction, a downward direction, or a lateral direction due to a very short length of flame and a high density of flame.

In contrast, Bunsen burners employ a system that supplies primary air required for combustion from a nozzle section injecting gas and that supplies excessive secondary air to a spot at which a flame is formed so as to realize complete combustion. Since the flame reacting with the secondary air is long, has low density, and tends to be directed upwardly, the Bunsen burner has a disadvantage in that it can be applied only to an upward combustion type.

Accordingly, in the case of the conventional downward combustion type condensing boiler, it is essential to use the pre-mixed burner in which the downward combustion is possible. However, the pre-mixed burner has disadvantages in that combustion stability is low, and that an expensive control system should be used to implement very complicated combustion control.

### [Disclosure]

### [Technical Problem]

Accordingly, the present invention has been made keeping in mind the above problems occurring in the related art, and an object of the present invention is to provide a latent heat exchanger of a condensing boiler having no limitation to use of a burner and installed in a simple structure, capable of reducing exhaust resistance of a combustion product, smoothly discharging condensed water generated therefrom, and improving recollecting efficiency of latent heat.

### [Technical Solution]

According to an aspect of the present invention, there is provided a latent heat exchanger of a condensing boiler, in which the condensing boiler includes a sensible heat exchanger absorbing combustion sensible heat generated from a burner, a latent heat exchanger absorbing latent heat of water vapor contained in a combustion product heat-exchanged by the sensible heat exchanger, an exhaust hood discharging the combustion product flowing through the latent heat exchanger, and a condensed water outlet discharging condensed water generated from the latent heat exchanger, characterized in that the combustion product burnt by the burner flows through the sensible heat exchanger, is vertically raised toward the latent heat exchanger, is slantingly lowered in an outward direction at an acute angle from a horizontal plane, is heat-exchanged by the latent heat exchanger, is vertically raised, and is discharged to the exhaust hood.

Here, the latent heat exchanger may include a plurality of tubes in front and rear inner sides thereof, and the tubes may be vertically disposed at predetermined intervals, be inclined downward toward front and rear outer sides of the latent heat exchanger, form flow paths so that the combustion product that flows through the sensible heat exchanger, is vertically raised is formed at the acute angle from the horizontal plane, and is divided and slantingly lowered in a frontward/rearward direction or in a leftward/rightward direction, and perform heat exchange with the combustion product.

Further, a cross section of the tubes may be each formed in a flat elliptical shape so that the sides thereof through which the combustion product flows have widths greater than heights of opposite ends thereof in a flat elliptical shape.

Also, a plurality of heat-exchanging fins may be coupled to outer surfaces of the tubes, which are provided on the front and rear inner sides of the latent heat exchanger, at predetermined intervals in a lengthwise direction of the tubes.

Further, an upper guide, opposite front and rear ends of which are formed as inclined faces corresponding to an inclined angle of the tubes, may be installed at an inner upper portion of the latent heat exchanger.

Further, the condensed water outlet may be provided on one side of a lower portion of the latent heat exchanger, and lower guides, which guide condensed water, which is collected on outer surfaces of the tubes and falls downward, toward the condensed water outlet, may be installed below the tubes of the front and rear inner sides of the latent heat exchanger.

Further, opposite left and right ends of the tubes may be coupled to left- hand end plates and right-hand end plates in which tube insertion holes having a shape corresponding thereto are formed, and left- hand flow path caps and right-hand flow path caps are coupled to outer sides of the left- hand end plates and right-hand end plates so as to guide the heat medium flowing along the interiors of the tubes so that the flow path of the heat medium is alternately changed from the left to the right and from the right to the left in the latent heat exchanger.

In addition, the left-hand flow path cap may include an upper flow path cap splitting and feeding the heat medium flowing into an inflow pipe to the tubes provided at opposite front and rear sides thereof, a plurality of intermediate flow path caps vertically provided at the opposite front and rear sides thereof and changing the flow paths of the heat medium, and a lower flow path cap collecting the heat medium flowing through the tubes provided at the opposite front and rear sides thereof and discharging the collected heat medium to an outflow pipe, and the right-hand flow path cap may include a plurality of sets of flow path caps vertically provided at opposite front and rear sides thereof and changing the flow paths of the heat medium.

### [Advantageous Effects]

According to a latent heat exchanger of a condensing boiler of the present invention, a plurality of tubes are vertically installed on front and rear inner sides of the latent heat exchanger so as to be inclined downwardly, thereby allowing an exhaust direction of a combustion product and a discharge direction of condensed water to be identical to reduce exhaust resistance of the combustion product and to smoothly discharge the condensed water.

Further, simple coupling structures between the tubes and the heat-exchanging fins and between the end plates and the flow path caps allow a flow path to be formed so that a flow direction of a heat medium flowing through the tubes is alternately changed to left and right sides in the latent heat exchanger. As such, a heat-exchanging area and time in a limited space in the latent heat exchanger can be increased to improve the heat-exchanging efficiency.

### [Description of Drawings]

FIG. 1 is a schematic view showing a structure of a conventional upward combustion type condensing boiler.

FIG. 2 is a schematic view showing a structure of a conventional downward combustion type condensing boiler

FIG. 3 is a schematic view showing a structure of a condensing boiler to which the present invention is applied.

FIG. 4 is a longitudinal sectional view of FIG. 3.

FIGS. 5 and 6 are perspective views showing a structure of the latent heat exchanger of the condensing boiler according to the embodiment of the present invention.

FIG. 7 is an exploded perspective view of FIG. 5.

FIG. 8 is a cross-sectional view taken along line A-A of FIG. 5.

<Description of Reference Numerals>

11, 21:blower, 12, 22: burner,

13, 23: combustion chamber, 14, 24: sensible heat exchanger,

15, 25: latent heat exchanger, 16: upper guide,

17: lower guide, 18, 28: condensed water outlet,

19, 29: exhaust hood, 26a: feed pipe,

26b: return pipe, 27: condensed water tray,

100: latent heat exchanger, 110: left-hand flow path cap,

111: upper flow path cap, 111 a: inflow pipe,

112, 112a, 113, 113a: intermediate flow path cap,

114: lower flow path cap, 114a: outflow pipe,

120: left-hand end plate, 121, 121 a, 131, 131 a, 151, 151 a: tube insertion hole,

130: front heat-exchanging fin, 130a: rear heat-exchanging fin,

140, 141, 142, 143, 144, 145, 146, 140a, 141 a, 142a, 143a, 144a, 145a, 146a: tube,

150: right-hand end plate, 160: right-hand flow path cap,

161: upper flow path cap, 162: intermediate flow path cap,

163: lower flow path cap, 170: upper guide,

180, 180a: lower guide, 190: condensed water outlet

### [Mode for Invention]

Hereinafter, exemplary embodiments of the present invention will be described in detail with reference to the accompanying drawings. Here, the same reference numerals will be used to denote components having the same function and operation as those in the related art.

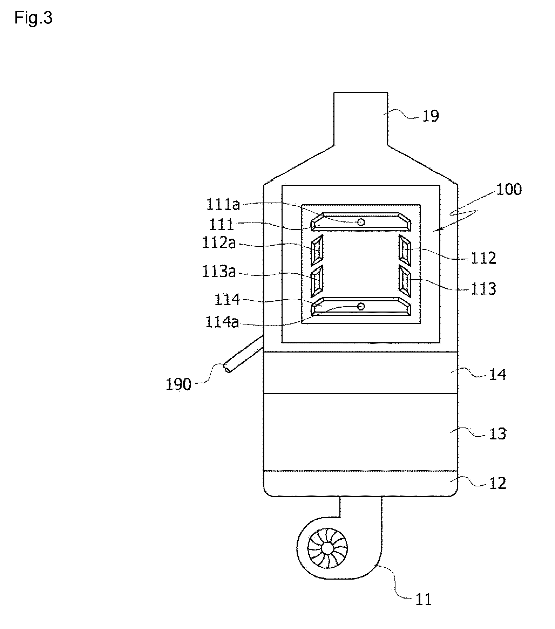

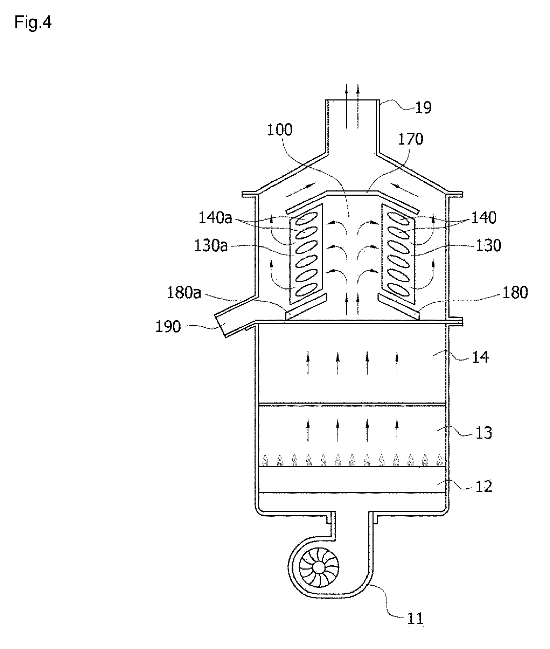

FIG. 3 is a schematic view showing a structure of a condensing boiler to which the present invention is applied, and FIG. 4 is a longitudinal sectional view of FIG. 3. FIGS. 3 and 4 show the condensing boiler when viewed from the left.

The condensing boiler according to an embodiment of the present invention is configured so that an upward combustion type burner 12 and a combustion chamber 13 are installed on an upper side of a blower 11 so that a flame is formed upwardly, so that a sensible heat exchanger 14 absorbing combustion sensible heat generated from the burner 12, a latent heat exchanger 100 absorbing latent heat of water vapor contained in a combustion product (exhaust gas) heat-exchanged by the sensible heat exchanger 14, and an exhaust hood 19 discharging the combustion product passing through the latent heat exchanger 100 are formed on an upper side of the combustion chamber 13, and so that a condensed water outlet 190 discharging condensed water generated from the latent heat exchanger 100 is formed on one side of a lower portion of the latent heat exchanger 100.

The present invention makes a feature of a configuration in which an exhaust direction of the combustion product and a discharge direction of the condensed water are identical so that the combustion product burnt by the burner 12 can reduce exhaust resistance in the process of passing through the sensible heat exchanger 14 and the latent heat exchanger 100 to be discharged to the exhaust hood 19 and so that the condensed water generated from the latent heat exchanger 100 can be smoothly discharged.

To this end, a plurality of tubes 140 and 140a, which are inclined downward toward the front (right side in FIGS. 3 and 4) and the rear (left side in FIGS. 3 and 4) of the interior of the latent heat exchanger 100 at an acute angle from the horizontal plane, are vertically installed in the front and rear of the interior of the latent heat exchanger 100 at predetermined intervals, and the combustion product flows between the tubes 140 and 140a disposed in the vertical direction.

An upper guide 170 is provided at an inner upper portion of the latent heat exchanger 100 in such a manner that opposite front and rear edges thereof are formed into downwardly inclined faces corresponding to the inclined angle of the tubes 140 and 140a.

Further, lower guides 180 and 180a are provided on lower sides of the tubes 140 and 140a so that the condensed water, into which the water vapor contained in the combustion product is condensed while passing through the latent heat exchanger 100, is collected on outer surfaces of the tubes 140 and 140a, falls downward from the outer surfaces of the tubes 140 and 140a, and is guided toward the condensed water outlet 190. The lower guides 180 and 180a also serve to guide the combustion product, which is vertically raised from the sensible heat exchanger 14, to the middle of the interior of the latent heat exchanger 100.

According to the structure of this latent heat exchanger 100, the combustion product burnt by the burner 12 passes through the sensible heat exchanger 14, and is vertically raised toward the middle of the interior of the latent heat exchanger 100. The combustion product raised in the vertical direction is subjected to a change in flow path by the tubes 140 and 140a disposed so as to be inclined with respect to the upper guide 170, is slantingly lowered in a frontward/rearward direction or in a leftward/rightward direction at the acute angle from the horizontal plane, and is subjected to heat exchange with a heat medium flowing into the tubes 140 and 140a while passing between the tubes 140 and 140a. Then, the combustion product is subjected to a change in flow path in a vertical direction again by front and rear walls of the latent heat exchanger 100, and is collected and discharged to the outside via the exhaust hood 19.

Here, the exhaust direction of the combustion product flowing between the tubes 140 and 140a, the flow direction of the condensed water that is collected on the outer surfaces of the tubes 140 and 140a and flows along the outer surfaces of the tubes 140 and 140a in a downwardly inclined direction, and the discharge direction of the condensed water that flows down to the upper surfaces of the lower guides 180 and 180a and is guided toward the condensed water outlet 190 are identical to one another. As such, the condensed water can be smoothly discharged without running into resistance of the combustion product.

Further, in the related art shown in FIG. 1, since the lower guide 17 is installed directly on the upper side of the sensible heat exchanger 14 over a wide area, the condensed water flowing down to the upper surface of the lower guide 17 is evaporated again, and thus the recollecting efficiency of the latent heat is lowered, and the exhaust resistance of the combustion product is increased.

However, in the present invention, since the lower guides 180 and 180a to which the condensed water flows down are installed in the front and rear of the upper side of the sensible heat exchanger 14 over a narrow area, an area and time in which the lower guides 180 and 180a are in contact with the condensed water are relatively reduced compared to those of the related art while the lower guides 180 and 180a are heated by the heat of combustion, a rate at which the condensed water is evaporated again can be reduced.

Further, in the related art shown in FIG. 1, the combustion product flowing from the sensible heat exchanger 14 by way of the latent heat exchanger 15 is collected on one side of the upper portion of the sensible heat exchanger 14, and then flows upward. Then, the combustion product flows from one end to the other end of the latent heat exchanger 15 in one direction, and flows between the heat-exchanging tubes disposed one upon another and the heat-exchanging fins. In this process, the combustion product runs into great exhaust resistance.

However, in the present invention, the combustion product is vertically raised from the sensible heat exchanger 14 toward the middle of the interior of the latent heat exchanger 100 with no interference, and then is divided into the front and rear sides. The combustion product moves slantingly between the front tubes 140 and between the rear tubes 140a, is vertically raised again, and is discharged to the exhaust hood 19. As such, the exhaust resistance of the combustion product can be remarkably reduced compared to that of the related art.

Hereinafter, a structure in which the tubes 140 and 140a are installed in the latent heat exchanger 100 and a structure of the flow path of the heat medium flowing into the tubes 140 and 140a will be described.

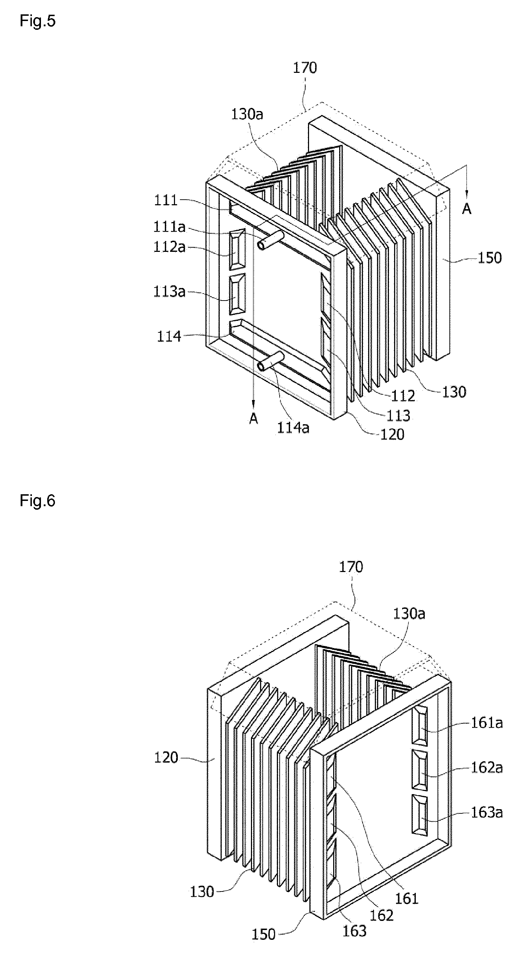

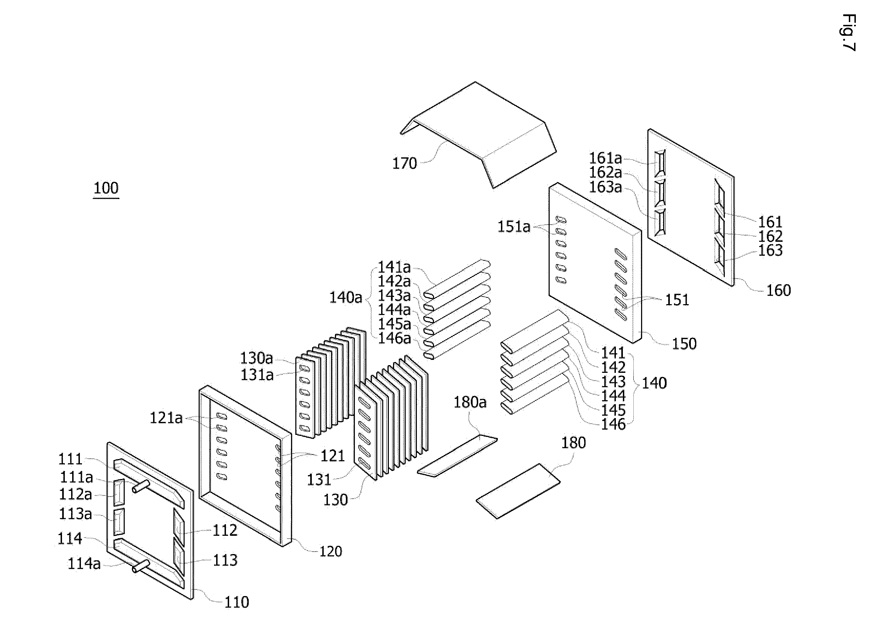

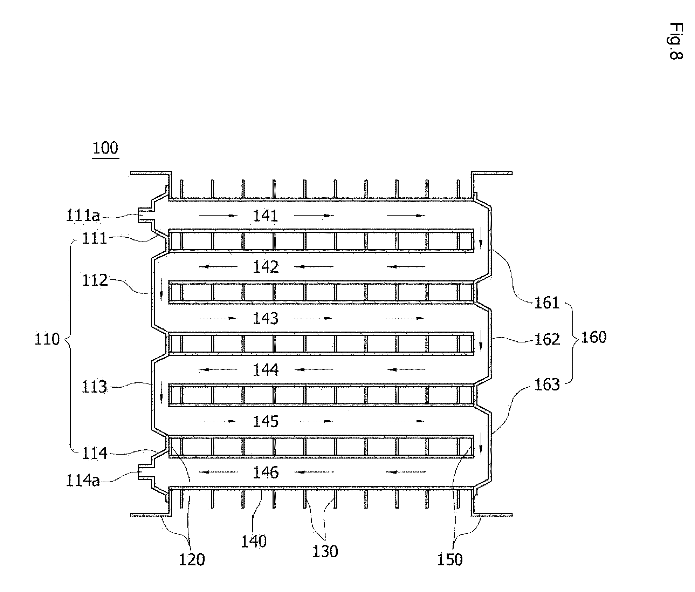

FIGS. 5 and 6 are perspective views showing a structure of the latent heat exchanger of the condensing boiler according to the embodiment of the present invention in which FIG. 5 is a perspective view when viewed from the left side and FIG. 6 is a perspective view when viewed from the right side. FIG. 7 is an exploded perspective view of FIG. 5, and FIG. 8 is a cross-sectional view taken along line A-A of FIG. 5.

Referring to FIGS. 5 to 7, the tubes 140 and 140a, which are vertically and slantingly disposed on the front and rear of the interior of the latent heat exchanger 100 at predetermined intervals, are each configured so that the sides thereof through which the combustion product flows have widths greater than heights of opposite ends thereof, i.e. has a cross section of a flat elliptical shape. In this case, a heat transmission area between the combustion product and the tubes 140 and 140a is increased, and flow resistance of the combustion product can be reduced.

Further, a plurality of plate-shaped heat-exchanging fins 130 and 130a are coupled to the outer surfaces of the tubes 140 and 140a at predetermined intervals in a longitudinal direction (in a leftward/rightward direction in the figure). In detail, a plurality of front heat-exchanging fins 130, in each of which tube insertion holes 131 corresponding to an outer circumferential shape of each tube 140 are vertically formed, are coupled to the outer surfaces of the tubes 140 (141, 142, 143, 144, 145, and 146) vertically disposed on the front side of the latent heat exchanger 100, and a plurality of rear heat-exchanging fins 130a, in each of which tube insertion holes 131 a are vertically formed, are coupled to the outer surfaces of the tubes 140a (141 a, 142a, 143a, 144a, 145a, and 146a) vertically disposed on the rear side of the latent heat exchanger 100.

The left-hand ends of the tubes 140 and 140a are coupled to a left-hand end plate 120 in which tube insertion holes 121 and 121 a corresponding thereto are formed, and the right-hand ends of the tubes 140 and 140a are coupled to a right-hand end plate 150 in which tube insertion holes 151 and 151a corresponding thereto are formed.

Further, a left-hand flow path cap 110 and a right-hand flow path cap 160 are coupled to outer sides of the left-hand end plate 120 and the right-hand end plate 150 so as to guide the heat medium flowing along the interiors of the tubes 140 and 140a so that the flow path of the heat medium is alternately changed in the latent heat exchanger 100 to left and right sides.

Here, to facilitate the coupling between the left-hand end plate 120 and the left-hand flow path cap 110 and the coupling between the right-hand end plate 150 and the right-hand flow path cap 160, the left-hand end plate 120 having the tube insertion holes 121 and 121 a may be configured so that edges thereof are formed with protrusions protruding leftward and so that the left-hand flow path cap 110 is fitted into a quadrangular space surrounded by the protrusions, and the right-hand end plate 150 having the tube insertion holes 151 and 151 a may be configured so that edges thereof are formed with protrusions protruding rightward and so that the right-hand flow path cap 160 is fitted into a quadrangular space surrounded by the protrusions.

The left-hand flow path cap 110 includes an upper flow path cap 111 splitting and feeding the heat medium flowing into an inflow pipe 111 a to the tubes 141 and 141a provided at opposite front and rear upper portions thereof, intermediate flow path caps 112, 113, 112a, and 113a vertically provided at opposite front and rear intermediate portions thereof and changing the flow path of the heat medium flowing in the tubes 142, 143, 144, 145, 142a, 143a, 144a, and 145a, and a lower flow path cap 114 collecting the heat medium flowing through the tubes 146 and 146a provided at opposite front and rear lower portions thereof and discharging the collected heat medium to the outflow pipe 114a.

The right-hand flow path cap 160 includes upper flow path caps 161 and 161 a changing flow paths of the tubes 141, 142, 141 a, and 142a provided at opposite front and rear upper portions thereof, intermediate flow path caps 162 and 162a changing flow paths of the tubes 143, 144, 143a, and 144a provided at opposite front and rear intermediate portions thereof, and lower flow path caps 163 and 163a changing flow paths of the tubes 145, 146, 145a, and 146a provided at opposite front and rear lower portions thereof.

According to these coupling structures between the tubes 140 and 140a and the heat-exchanging fins 130 and 130a and between the left- and right-hand end plates 120 and 150 and the left- and right-hand flow path caps 110 and 160, as shown in FIG. 8, the flow path of the heat medium flowing in a limited space of the interior of the latent heat exchanger 100 is alternately changed from the left to the right and from the right to the left as denoted by arrows. As such, the heat transmission area and time required to transmit the heat from the combustion product can be increased to improve the heat-exchanging efficiency. Further, since the coupling structure is simplified, it is easy to manufacture the latent heat exchanger 100.

## Claims

1. A latent heat exchanger of a condensing boiler, in which the condensing boiler includes a sensible heat exchanger absorbing combustion sensible heat generated from a burner, a latent heat exchanger absorbing latent heat of water vapor contained in a combustion product heat-exchanged by the sensible heat exchanger, an exhaust hood discharging the combustion product flowing through the latent heat exchanger, and a condensed water outlet discharging condensed water generated from the latent heat exchanger, **characterized in that**
the combustion product burnt by the burner flows through the sensible heat exchanger, is vertically raised toward the latent heat exchanger, is slantingly lowered in an outward direction at an acute angle from a horizontal plane, is heat-exchanged by the latent heat exchanger, is vertically raised, and is discharged to the exhaust hood.

2. The latent heat exchanger according to claim 1, wherein the latent heat exchanger includes a plurality of tubes in front and rear inner sides thereof, and the tubes are vertically disposed at predetermined intervals, are inclined downward toward front and rear outer sides of the latent heat exchanger, form flow paths so that the combustion product that flows through the sensible heat exchanger, is vertically raised is formed at the acute angle from the horizontal plane, and is divided and slantingly lowered in a frontward/rearward direction or in a leftward/rightward direction, and perform heat exchange with the combustion product.

3. The latent heat exchanger according to claim 2, wherein a cross section of the tubes are each formed in a flat elliptical shape so that the sides thereof through which the combustion product flows have widths greater than heights of opposite ends thereof in a flat elliptical shape.

4. The latent heat exchanger according to claim 2, wherein a plurality of heat-exchanging fins are coupled to outer surfaces of the tubes, which are provided on the front and rear inner sides of the latent heat exchanger, at predetermined intervals in a lengthwise direction of the tubes.

5. The latent heat exchanger according to claim 2, wherein an upper guide whose opposite front and rear ends are formed as inclined faces corresponding to an inclined angle of the tubes is installed at an inner upper portion of the latent heat exchanger.

6. The latent heat exchanger according to claim 2, wherein:
the condensed water outlet is provided on one side of a lower portion of the latent heat exchanger, and
lower guides, which guide condensed water, which is collected on outer surfaces of the tubes and falls downward, toward the condensed water outlet, are installed below the tubes of the front and rear inner sides of the latent heat exchanger.

7. The latent heat exchanger according to any one of claims 2 to 6, wherein opposite left and right ends of the tubes are coupled to left- hand end plates and right-hand end plates in which tube insertion holes having a shape corresponding thereto are formed, and left- hand flow path caps and right-hand flow path caps are coupled to outer sides of the left- hand end plates and right-hand end plates so as to guide the heat medium flowing along the interiors of the tubes so that the flow path of the heat medium is alternately changed from the left to the right and from the right to the left in the latent heat exchanger.

8. The latent heat exchanger according to claim 7, wherein:
the left-hand flow path cap includes an upper flow path cap splitting and feeding the heat medium flowing into an inflow pipe to the tubes provided at opposite front and rear sides thereof, a plurality of intermediate flow path caps vertically provided at the opposite front and rear sides thereof and changing the flow paths of the heat medium, and a lower flow path cap collecting the heat medium flowing through the tubes provided at the opposite front and rear sides thereof and discharging the collected heat medium to an outflow pipe; and
the right-hand flow path cap includes a plurality of sets of flow path caps vertically provided at opposite front and rear sides thereof and changing the flow paths of the heat medium.
